# EUROPEAN PATENT SPECIFICATION

(11) **EP 1 187 482 B1**
(45) Date of publication and mention of the grant of the patent: **20.08.2008**
(21) Application number: 01120413.8
(22) Date of filing: 27.08.2001
(51) Int. Cl.: H04N 7/16

(54) **Method of locking or unlocking a service on a digital receiver of audio-visual programmes and device for implementing the method**
Verfahren und Vorrichtung zum Sperren oder Freigeben eines Dienstes in einem Digitalempfänger für Audio-Video Programme
Procédé et dispositif pour vérouiller ou dévérouiller un service dans un récepteur digital pour programmes audio-visuels

(30) Priority: 05.09.2000 FR 0011264
(43) Date of publication of application: 13.03.2002
(73) Proprietor: Thomson Licensing, 92100 Boulogne-Billancourt (FR)
(72) Inventor: Deniau, Eric, 35190 La Baussaine (FR); Gautier, René, 56640 Arzon (FR); Renault, William, 35510 Cesson-Sevigne (FR)
(74) Representative: Kohrs, Martin

(56) References cited:
- EP-A- 0 963 114
- WO-A-97/23997
- WO-A-99/44361
- WO-A-99/66714
- US-A- 5 382 983
- US-A- 6 020 882

## Description

The present invention relates to a simple method for locking/unlocking a programme on a digital receiver of audio-visual programmes, referred to hereinafter as a receiver. The invention also relates to a receiver of audio-visual programmes implementing the method.

Patent US 5,969,748 discloses a method of controlling access to television channels. Locking is performed from a list of accessible channels by selecting locking criteria. The criteria selectable from a list are schedule, topic, parental rating and/or channel. The system operates as follows. After having entered his password, the user enters on an interface a criterion from a list of criteria, for example a topic. All the programmes of a list of channels encountering this topic are locked. When the user chooses to watch or record a locked programme from the list of channels, a screen window appears inviting him to input his password. If the password input is correct, all the programmes encountering the selected topic are unlocked. The problem with this method is that it operates only on the basis of a list of accessible channels. It therefore proves to be rather impractical according to this prior art to lock the programme of the current channel, that is to say that to which the user is connected at a given moment, since this channel must previously have been tagged in a list of channels. Another problem is that it is impossible to lock a channel which is unknown a priori, that is to say which does not appear in the list of channels. The list of channels may in fact not be complete and the user may find himself faced with a channel discovered by chance and which it is impossible for him to lock. Moreover, when the user chooses to unlock the programme, the mode of unlocking is unique.

The object of the present invention is therefore to alleviate the drawbacks of the prior art by proposing a method of locking a programme on a digital decoder not requiring the presence of a list of accessible channels. The method in fact allows the user to lock the programme to which the receiver is connected. The method according to the invention additionally makes it possible to unlock a programme according to various modes. The invention will for example allow parental control.

This aim is achieved by a method of controlling access to audio-visual programmes on a digital receiver (1) of audio-visual programmes comprises, regardless of the programme, a phase of locking the programme currently being displayed generated by an manual action during the current as set out by claim 1.

According to another feature, the phase of locking a current programme comprises:
- a step of placing in memory at least one descriptor sent in the packets transmitted by the current programme and identifying either the programme, or a particular event of the programme,
- a step of activating the locking corresponding to the stored descriptor.

According to another feature, the locking is selected according to one of several modes such as:
- temporary locking,
- permanent locking,
- event-based locking.

According to another feature, the unlocking is selected according to one of several modes such as:
- temporary unlocking,
- permanent unlocking,
- event-based unlocking.
   According to another feature, the temporary unlocking is eliminated by inhibiting or erasing the descriptor from the memory,
- either following a step of detecting a change of channel,
- or following a detection of a cycle of switching off and switching on the apparatus broadcasting the audio-visual programmes.

According to another feature, the unlocking comprises the steps:
- of displaying a screen window indicating that the chosen service is locked,
- of triggering, by means, access to the process for unlocking the service,
- of displaying a screen window suggesting entry of the user code or exit from the unlocking procedure,
- of comparing the entered code with a stored code,
- of displaying a screen window suggesting various modes of unlocking, if the code entered is correct,
- of selecting a mode of unlocking,
- of unlocking the service according to the mode chosen, or
- of displaying a screen window suggesting that the user code be re-entered or that the procedure for unlocking the service be exited, if the code entered is incorrect.

According to another feature, failing selection, the unlocking is temporary.

According to another feature, the re-locking of a service unlocked in a temporary manner is automatic.

According to another feature, the event-based mode of unlocking relates to the next event or to several consecutive events thereof during which the operator performs the unlocking.

According to another feature, the locking comprises the steps:
- of accessing the process for locking the programme,
- of displaying a screen window prompting the user to enter a user code or to exit the locking procedure,
- of displaying a screen window signalling that the service is locked, if the user code entered is correct, or
- of displaying a screen window suggesting that the user code be re-entered or that the locking procedure be exited, if the user code entered is incorrect.

According to another feature, the locking can be performed from a list of user-accessible programmes.

According to another feature, the method comprises a step of storing the descriptor of the current event when the mode of unlocking is event-based and a step of detecting, by the microprocessor, the change of descriptor of the event so as to perform the event-based unlocking and allow the decoding of the event.

Another aim of the invention is to propose a device implementing this method.

This other aim is achieved by a digital receiver for controlling access to audio-visual programmes as set out by claim 13.

According to another feature, the means of triggering of the user interface comprise at least one button making it possible to access the locking or unlocking process.

According to another feature, the means of reaction comprise means for storing the information associating a programme with a mode of locking or of unlocking of the receiver.

According to another feature, the means of reaction comprise means of detecting an event of the stored programme, of triggering the unlocking of the decoder during the event and of causing locking upon detection of the end of the event.

The invention, together with its characteristics and advantages, will emerge more clearly from reading the description given with reference to the appended drawings in which:
- figure 1 represents the operating diagram of a DVB (Digital Video Broadcast) decoder,
- figure 2 represents in plan view a remote control used for the decoder,
- figures 3 to 7 represent the monitor keyed with various screens at various steps of the method,
- figure 8 represents a flowchart of the locking procedure,
- figure 9 represents a flowchart of the unlocking procedure.

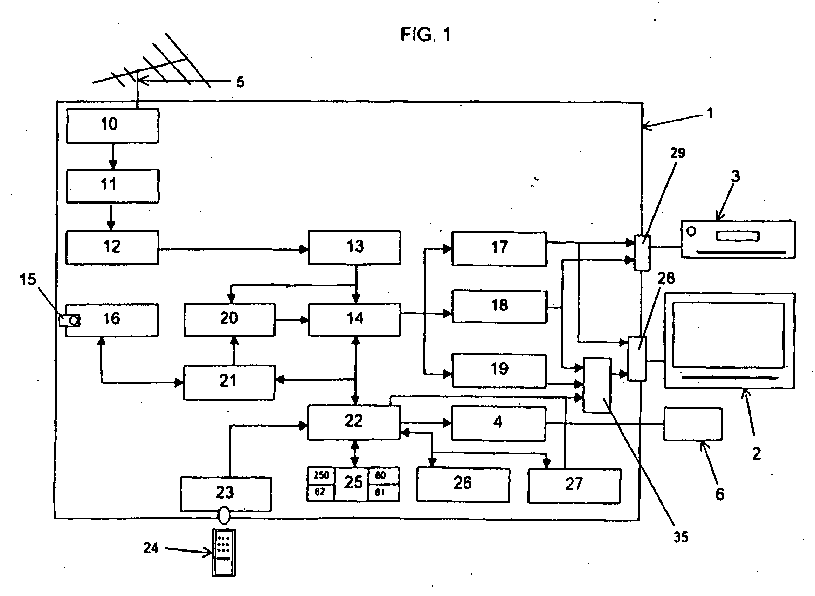

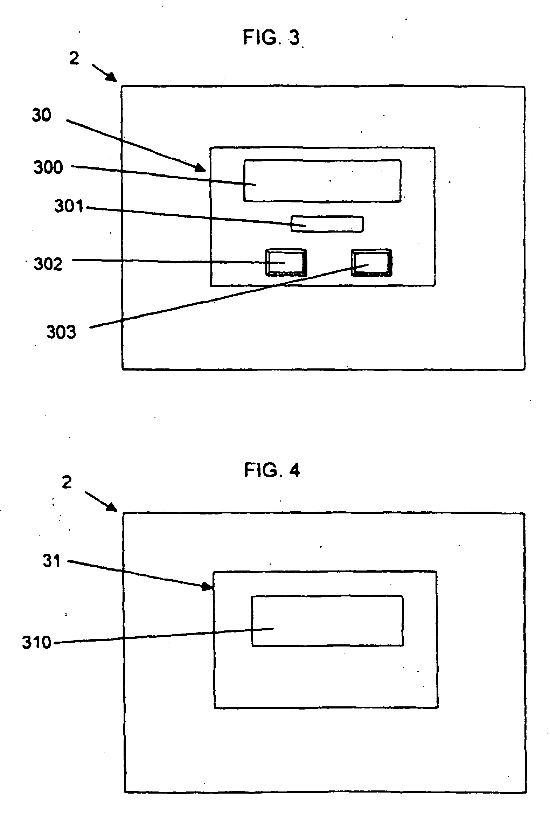

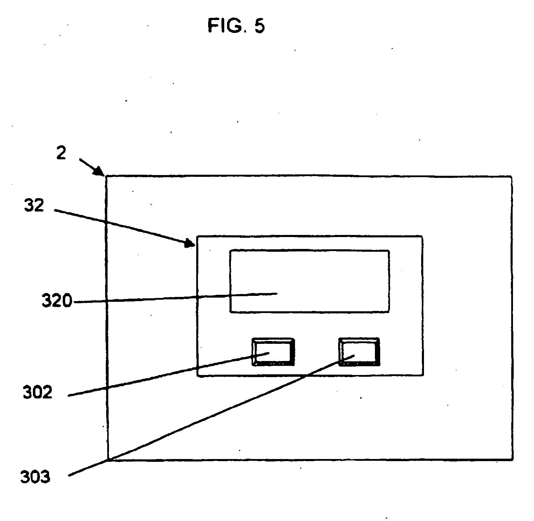

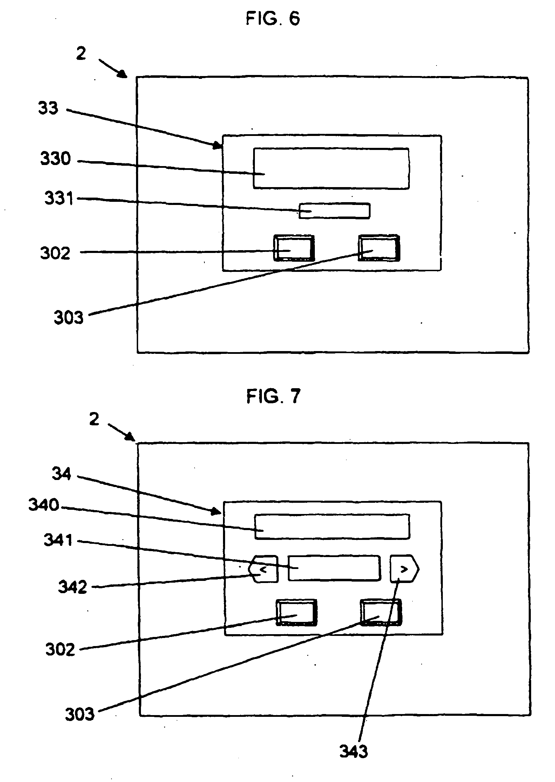

The invention will be described in conjunction with figures 1 to 9.

The invention relates to a method of locking/unlocking a programme on any type of digital receiver of audio-visual programmes, such as a decoder (1). Digital decoders (1) are for example of the following types: DVB (Digital Video Broadcast), DSS (Digital Satellite System) or any type of Internet terminal. In all types of digital decoder (1), there is a means for identifying a programme broadcast on a channel in a unique manner. In DVB, it is a triple identifying the programme. This triple is composed of three identifiers ("network" ID, "transport stream" ID and "service" ID), one relating to the network, a second, the transport stream, and a third, the service. When it has not been previously stored by the software, the triple identifying the current programme can be retrieved, in the case of a DVB decoder, by combining the information found in the PMT table (in which the service ID appears) and "SDT actual" table (in which the original "network ID" and "transport stream ID" data appear. In the case of an Internet terminal, this information will be replaced with the complete name of the current URL which is stored in the search, display and edit utility (otherwise known as the "browser") and which identifies a programme, in the form of a character string.

A DVB digital decoder used within the framework of our invention is made up as follows.

The decoder is connected to a television (2) through a "SCART" socket (28), to a video recorder (3) also through a "SCART" socket (29) and to the switched telephone network (6) through a modem (4).

The decoder (1) comprises a tuner (10) linked to a frequency converter of an antenna (5). The tuner (10) is connected to an error correction circuit (12) through a demodulator (11). The output of the error correction circuit (12) is linked to a demultiplexer (13). This demultiplexer (13) separates the various data packets according to their content and sends them to the relevant items through a buffer memory (14). The relevant items include among others an access control module comprising a chip card (15) inserted into a connector (16), an audio decoder (17), a video decoder (18) and a teletext management circuit (19).

The access control module also comprises a descrambler (20), through which any encrypted packet must pass before being stored in the buffer memory (14). The descrambler (20) is managed by a verifier circuit (21), which authorises or otherwise the descrambling as a function of the user's access rights.

The decoder also comprises a microprocessor (22) linked to an infrared interface (23) capable of receiving signals from a remote control (24). The microprocessor (22) is moreover linked to a memory (25) storing the triples identifying each programme. The memory (25) comprises a programme (80) for locking a programme, a programme (81) for unlocking a programme as well as a table (82).

The microprocessor (22) reads the demultiplexed data of the programme from the buffer memory (14). These data of the channel correspond to information about each event broadcast by the programme. This information may be the name of the event, the parental rating, etc.

The signals originating from the video decoder (18), from the audio decoder (17) and from the microprocessor (22) are sent to a mixer circuit (35), connected to the SCART socket (28) linking the decoder (1) to the television (2). This mixer (35) also receives signals from a video keying circuit (27), this circuit receiving signals formulated by the microprocessor from a software layer (26) for managing the infrared signals of the interface (23).

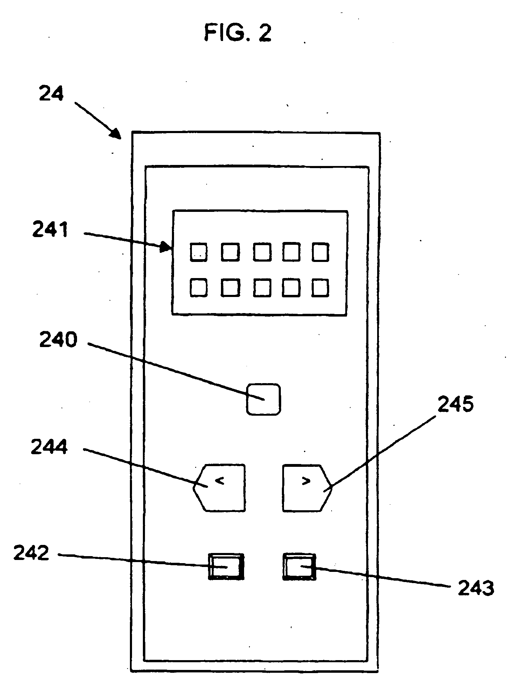

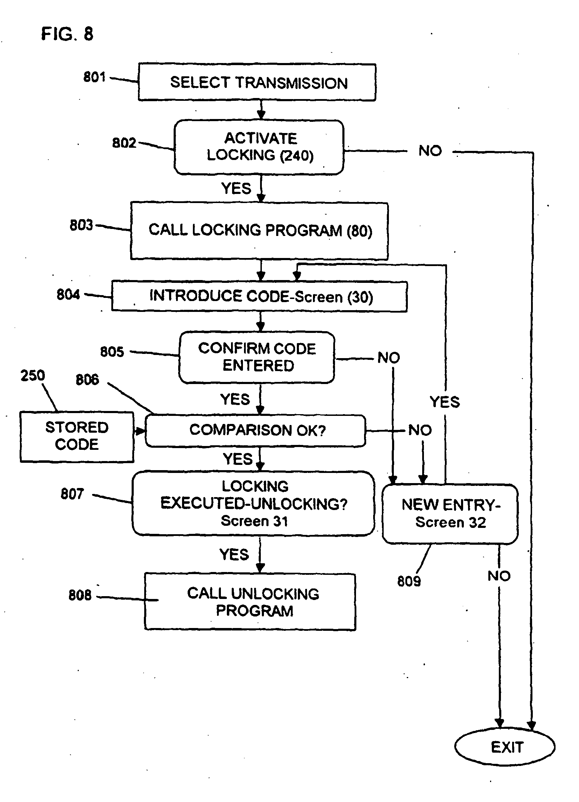

All the manipulations will for example be performed from a remote control (24) illustrated in figure 2. The user connects up to the programme which he wants to lock, as represented in step (801) of figure 8. He presses a button of the remote control, indicating that he wants to lock the programme to which he is connected, as represented in step (802) of figure 8. This button may for example bear the name "lock/unlock" (240). Actuation of this button (240) causes the programme of a specific signal by the remote control (24). The specific signal, received by the infrared interface (23), triggers the processing, by the microprocessor (22), of a specific subroutine (80) stored in the memory (25) associated with the microprocessor (22) and calling the locking process, as represented in step (803) of figure 8. This specific programme (80) causes the displaying on the television (2) of a screen window (30) for entering a code, as represented in step (804) of figure 8. This code may for example be identical to a code already present in the decoder (1). This code should not be known to persons for whom the programme is locked, children for example, since it makes it possible to access the locking or the unlocking of a programme. The code is entered by the user from a digital keypad (241) on the remote control (24). The entry screen window (30) is made up of an indication (300) indicating to the user that he has just accessed the process for locking a programme, while inviting him to input his code. This screen window (30) also displays a zone (301) provided for the displaying of the entry of the code, for example in the form of asterisks so as to prevent the code from being revealed to an onlooker, and two keys (302, 303) corresponding to buttons of the remote control (24). One button, for example "OK" (242), is intended for confirming entry of the code, the other button, for example "EXIT" (243), for exiting the locking process. If the user confirms his code, as represented in step (805) of figure 8, the specific subroutine (80), executed by the microprocessor (22), compares the code entered with the code (250) stored in the memory (25), as represented in step (806) of figure 8, and if the code entered is correct, the programme is then locked as represented in step (807). The specific subroutine (80), executed by the microprocessor (22), allows the sending of the information required for the displaying of a screen window (31) which then appears, while indicating the locking of the programme and while inviting the user by pressing the "lock/unlock" button (240) of the remote control (24) to access the process for unlocking the programme, as represented in step (807) of figure 8. The user may therefore activate the unlocking programme, as represented in step (808) of figure 8. If the user confirms his code and if the code entered is incorrect, the specific subroutine (80), executed by the microprocessor (22), compares the code entered with the code (250) stored in the memory (25), as represented in step (806) of figure 8, and sends the information so as to display a screen window (32), indicating that his code is incorrect. The screen window (32) also invites the user, through a message (320), to recommence entry of the code by pressing the "OK" button (242), that is to say to return to step (804) or to exit the locking process by pressing the "EXIT" button (243), as represented in step (809) of figure 8. The image of a locked programme is not displayed on the screen of the television (2), the device displays for example only the fact that the programme is locked.

According to a variant embodiment, an event of a current programme or a current programme is locked following a single press of the "lock/unlock" button (240) of the remote control (24). No code entry is required at the moment of the locking of the event or of the channel. On the other hand, unlocking will require the entry of a code stored previously, for example when initially commissioning the decoder, with the aid of a menu (not illustrated) . This variant allows instantaneous locking from a single button, this being especially beneficial when the viewer is distracted by a telephone call, a visitor or some other urgent situation.

The unlocking according to the method occurs as follows.

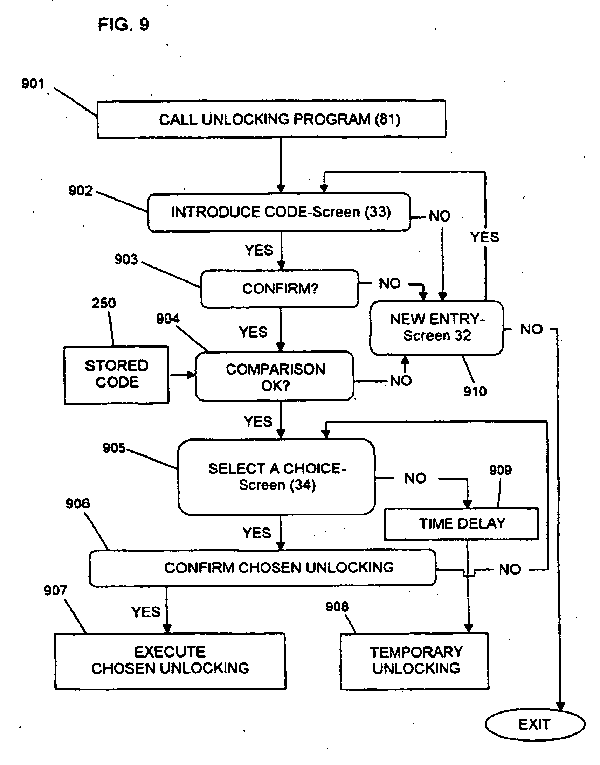

When the user seeks to connect up to a locked programme, the programme for using the decoder examines the table (82) of locked programmes in the memory (25) and invites the user to unlock by way of the screen window (31), as represented in step (807) of figure 8. The decoding of the programme is executed if the latter is not locked. This screen window (31) invites the user, via a message (310), to press the "lock/unlock" button (240) so as to access the process for unlocking the locked programme which he wants to display. After pressing this button (240), the specific signal, received by the infrared interface (23), triggers the processing, by the microprocessor (22), of a specific subroutine (81) stored in the memory (25) associated with the microprocessor (22) and calling the unlocking process, as represented in step (901) of figure 9. A new screen window (33) then appears. This screen window (33) is made up of a text zone (330), indicating that the user has just entered the process for unlocking the programme and inviting him to input his code, as represented in step (902) of figure 9. This code is the same as the one used for locking a programme. The user enters his code with the aid of the keypad (241) of the remote control (24). This entry is manifested by the displaying of asterisks in the zone (331) of the screen window (33). The user confirms his code by virtue of the "OK" button (242) or prefers to exit the unlocking process via the "EXIT" button (243). In the latter case, the programme then remains locked. After confirming the code, as represented in step (903) of figure 9, the specific subroutine (81) executed by the microprocessor (22) compares the code entered with the code (250) stored in the memory (25), as represented in step (904) of figure 9, and if the code entered is correct, sends the information so as to display a new screen window (34), as represented in step (905) of figure 9. This screen window (34) allows the user to select a particular mode of unlocking for the locked programme to which he is connected. To do this, the screen window (34) is made up of a text zone (340) reminding the user that he is in an unlocking process, of two keys (302, 303), corresponding to the "OK" button (242) and "EXIT" button (243) of the remote control (34), respectively for confirming and exiting the process and of a zone (341) for selection of the mode of unlocking. This selection is made by pressing two shift buttons "<" (244) and ">" (245) of the remote control (24). These shift buttons (244, 245), symbolised on the screen window (34), on either side of the text zone (341) presenting the mode of unlocking, through two keys "<" (342) and ">" (343), allow scrolling of the modes of unlocking the programme. The use of the shift buttons (244, 245) allows the display of various unlocking menus provided, corresponding to the following three modes: temporary unlocking, permanent unlocking or event-based unlocking. By acting on the shift arrows (244, 245) of the remote control (24), the user selects one of these modes, then confirms his choice by pressing the "OK" button (242) on his remote control (24), as represented in step (906) of figure 9. The programme is then unlocked according to the mode chosen, as represented in step (907) of figure 9. The user can at any moment choose to leave the unlocking process by pressing the "EXIT" button (243). If, after comparison in step (904), the code entered is incorrect, the specific subroutine executed by the microprocessor sends the information so as to display a screen window (32) indicating that the code entered is incorrect. The window also invites the user in a step (910) to re-enter his code by pressing the "OK" button (242), that is to say to return to step (902) or to exit the unlocking process by pressing the "EXIT" button (243).

Failing selection with the aid of the scroll buttons (244, 245), the mode of unlocking after a certain time delay (909) is fixed at "temporary" by the programme (81), as represented in step (908) of figure 9.

Temporary unlocking of the programme signifies that if the user leaves the programme which he has just unlocked in order to connect up to, for example, another programme and should the user return to the programme that he had unlocked, this programme will again be locked. The user will therefore have to instigate a new unlocking process if he wishes to have access thereto. This mode allows the user who unlocks a programme not to have to worry about locking the programme when he leaves it.

Permanent unlocking of the programme signifies that if the user leaves the programme for, for example, another programme and should he return to the initial programme, the latter will still be unlocked. This allows the user to unlock a programme for which he estimates that an inaccessibility is no longer necessary.

Event-based unlocking signifies that the user unlocks the programme for the time corresponding to the remaining duration of the event in progress. After the event-based unlocking of the programme, when the event has terminated, the programme is locked again.

It is possible to extend event-based unlocking to the event following the event in progress or even to several consecutive events. In this case the programme (81) performs the reading of the code identifying the event and those following it, and interrupts the programme when the latter no longer corresponds to the event or to the event sequence chosen.

In a process for locking a programme, the memory (25) stores the triple identifying the programme. Through the use of a so-called MMI software layer (26), the microprocessor (22) prohibits connection to the desired programme, that is to say does not open the video and audio streams. Thereafter, through the use of this software layer (26), the microprocessor acts on the video keying circuit (27) which will manage the display of the screen window (31) on the television (2) indicating that the programme is locked. At each change of programme, the microprocessor (22) scans the memory (25) so as to ascertain whether the triple identifying the current programme which the user has selected is contained in the table (82). If the triple is stored in the table (82) of the memory (25), the microprocessor (22), through the software layer (26), disables the video and audio connection, and then acts on the video keying circuit (27) which will then take charge of the display of the locking messages. The video keying circuit (27) also takes charge of showing all the screen windows for entry, unlocking, etc.

When the unlocking of the programme is temporary, the microprocessor (22) authorises the mixer (35) to send the information to the television (2). The programme is automatically re-locked after a change of programme.

When the unlocking of the programme is permanent, the triple is removed from the memory (25) without being reincorporated, except in the case of a new locking of the programme.

When the unlocking relates to a particular event of a programme, the memory (25) will store an information cue relating to the event in progress for which the user wishes that the programme be unlocked. This information cue is stored among other information cues about the event in the buffer memory (14). This information cue is for example the identifier of the event in progress of a given programme and has the name "event ID". This "event ID" identifier is extracted from the information broadcast in the "EIT present/following" table of the current event. During a subsequent selection of the event by a user, a comparison is made between the "event ID" identifier of the event selected and the "event ID" identifier scored. If these values are equal, the programme remains unlocked, the unlocked event has not in fact terminated. If these values are different, the programme is re-locked automatically since the event for which the programme has been unlocked has terminated. In the latter case, the "EIT present/following" table has altered or, stated otherwise, its version number has been incremented.

When the user performs an event-based unlocking, the microprocessor (22) receives, from the other items, the signal for detecting a change of event. The microprocessor (22) then acts on the software layer (26) so as to re-lock the programme. It is also possible to unlock the following event or even several consecutive events.

It is possible to imagine selection of a mode of locking. The locking could be temporary, permanent or event-based. The locking procedure would then be the same as the unlocking procedure presented above. In the case where event-based locking is desired, the "event ID" identifier of the event in progress of a programme is taken out of the "EIT present/following" table and stored in the memory (25). This event may already form the subject of a locking, for example temporary or permanent, of the programme on which it is broadcast. During event-based locking, the "event ID" identifier of the current event is compared with the "event ID" identifier stored. If their values are equal, this signifies that the event for which the programme is locked has not terminated, the programme then remains locked. On the other hand, if their values are different, this signifies that the event has changed and the programme unlocks automatically.

It should be obvious to persons versed in the art that the present invention allows embodiments in numerous other specific forms without straying from the field of application of the invention as claimed. Consequently, the present embodiments must be regarded by way of illustration, but may be modified within the field defined by the scope of the attached claims, and the invention should not be limited to the details given herein above.

## Claims

1. Method of controlling access to audio-visual programme on a digital receiver (1) of audio-visual programme, **characterised in that** it comprises, regardless of the programme,
- a step of receiving an identifier of the currently displayed programme,
- a step of locking the programme currently being displayed generated by an pressing on a button dedicated to a locking command during the current programme displaying, the pressing of this button triggering a step of writing the identifier of the current programme in a memory of the receiver for locking this programme,
- a step of blocking the displaying of the current programme if its identifier is stored in the memory.

2. Method of controlling access according to Claim 1, **characterised in that** the phase of locking a current programme comprises:
- a step of placing in memory at least one descriptor sent in the packets transmitted by the current programme and identifying either the programme, or a particular event of the programme,
- a step of activating the locking corresponding to the stored descriptor.

3. Method of controlling access according to Claim 1 or 2, **characterised in that** the locking is selected according to one of several modes such as:
- temporary locking,
- permanent locking,
- event-based locking.

4. Method of controlling access according to Claim 1, **characterised in that** it comprises a phase of unlocking being selected according to one of several modes such as:
- temporary unlocking,
- permanent unlocking,
- event-based unlocking.

5. Method of controlling access according to Claim 4, **characterised in that** the temporary unlocking is eliminated by inhibiting or erasing the descriptor from the memory,
- either following a step of detecting a change of channel,
- or following a detection of a cycle of switching off and switching on the apparatus broadcasting the audio-visual programmes;
said descriptor identifying the service unlocked.

6. Method of controlling access according to Claim 1, 4 or 5, **characterised in that** it comprises a unlocking phase comprising the steps:
- of displaying a screen window (31) indicating that the chosen service is locked,
- of triggering, by means, access to the process for unlocking the service,
- of displaying a screen window (33) suggesting entry of the user code or exit from the unlocking procedure,
- of comparing the entered code with a stored code,
- of displaying a screen window (34) suggesting various modes of unlocking, if the code entered is correct,
- of selecting a mode of unlocking,
- of unlocking the service according to the mode chosen, or
- of displaying a screen window (32) suggesting that the user code be re-entered or that the procedure for unlocking the service be exited, if the code entered is incorrect.

7. Method of controlling access according to Claim 6, **characterised in that**, failing selection, the unlocking is temporary.

8. Method of controlling access according to any one of Claims 4 to 7, **characterised in that** the re-locking of a service unlocked in a temporary manner is automatic.

9. Method of controlling access according to Claim 4 or 6, **characterised in that** the event-based mode of unlocking relates to the next event or to several consecutive events thereof during which the operator performs the unlocking.

10. Method of controlling access according to Claim 1, **characterised in that** the locking comprises the steps:
- of accessing the process for locking the programme,
- of displaying a screen window (30) prompting the user to enter a user code or to exit the locking procedure,
- of displaying a screen window (31) signalling that the service is locked, if the user code entered is correct, or
- of displaying a screen window (32) suggesting that the user code be re-entered or that the locking procedure be exited, if the user code entered is incorrect.

11. Method of controlling access according to Claim 10, **characterised in that** the locking can be performed from a list of user-accessible programmes.

12. Method of controlling access according to Claim 2 or 4, **characterised in that** it comprises a step of storing the descriptor of the current event when the mode of unlocking is event-based and a step of detecting, by the microprocessor (22), the change of descriptor of the event so as to perform the event-based unlocking and allow the decoding of the event.

13. Digital receiver (1) for controlling access to audio-visual programmes comprising a means for receiving an identifier of the currently displayed programme, a user interface with the receiver (1), this interface comprising a button dedicated to the locking of the currently displayed program, means for triggering locking of the programme currently being displayed activated by the pressing of the dedicated button during the current programme displaying, the pressing of the button triggering a means for writing the identifier of the current programme in a memory of the receiver, and a means for blocking the displaying of the current programme if its identifier is stored in the memory.

14. Digital receiver for controlling access to audio-visual programmes according to Claim 13, **characterised in that** it comprises a means for selecting via the user interface one of several modes of locking, and a means for recording in the receiver (1) of the information required for implementing the chosen locking.

15. Digital receiver for controlling access to audio-visual programmes according to Claim 13, **characterised in that** the means of triggering of the user interface comprise at least one button making it possible to access the locking or unlocking process.

16. Digital receiver for controlling access to audio-visual programmes according to Claim 13 or 14, **characterised in that** the means of reaction comprise means for storing the information associating a programme with a mode of locking or of unlocking of the receiver (1).

17. Digital receiver for controlling access to audio-visual programmes according to Claim 13, **characterised in that** the means of reaction comprise means of detecting an event of the stored programme, of triggering the unlocking of the decoder during the event and of causing locking upon detection of the end of the event.

## Patentansprüche

1. Verfahren zum Steuern von Zugriff auf audiovisuelle Programme in einem digitalen Empfangsgerät (1) für audiovisuelle Programme, **dadurch gekennzeichnet, dass** es unabhängig von dem Programm umfasst:
- einen Schritt zum Empfangen einer Identifizierung des aktuell gezeigten Programms,
- einen Schritt zum Sperren des Programms, das aktuell gezeigt wird, der durch ein Drücken auf einen Knopf erzeugt wird, welcher während des Anzeigens des aktuellen Programms an einen Sperrbefehl zweckgebunden ist, wobei das Drücken dieses Knopfes einen Schritt zum Schreiben der Identifizierung des aktuellen Programms in einen Speicher des Empfangsgerätes zum Sperren dieses Programms auslöst,
- einen Schritt zum Blockieren des Anzeigens des aktuellen Programms, wenn seine Identifizierung in dem Speicher gespeichert ist.

2. Verfahren zum Steuern von Zugriff gemäß Anspruch 1, **dadurch gekennzeichnet, dass** die Phase zum Sperren eines aktuellen Programms umfasst:
- einen Schritt zum Platzieren, in einen Speicher, von mindestens einem Beschreiber, der in den Paketen gesendet wird, die durch das aktuelle Programm übertragen werden, und zum Identifizieren von entweder dem Programm oder einem besonderen Ereignis des Programms,
- einen Schritt zum Aktivieren des Sperrens entsprechend dem gespeicherten Beschreiber.

3. Verfahren zum Steuern von Zugriff gemäß Anspruch 1 oder 2, **dadurch gekennzeichnet, dass** das Sperren gemäß einer von mehreren Betriebsarten ausgewählt wird, wie beispielsweise:
- vorübergehendes Sperren,
- dauerhaftes Sperren,
- ereignisabhängiges Sperren.

4. Verfahren zum Steuern von Zugriff gemäß Anspruch 1, **dadurch gekennzeichnet, dass** es eine Phase zum Freigeben umfasst, die gemäß einer von mehreren Betriebsarten ausgewählt wird, wie beispielsweise:
- vorübergehendes Freigeben,
- dauerhaftes Freigeben,
- ereignisabhängiges Freigeben.

5. Verfahren zum Steuern von Zugriff gemäß Anspruch 4, **dadurch gekennzeichnet, dass** das vorübergehende Freigeben ausgeschaltet wird, indem der Beschreiber unterdrückt oder aus dem Speicher gelöscht wird,
- entweder auf einen Schritt zum Erfassen eines Kanalwechsels folgend,
- oder auf eine Erfassung eines Zyklus von Ausschalten und Einschalten des Gerätes folgend, das die audiovisuellen Programme ausstrahlt;
wobei der Beschreiber den freigegebenen Dienst identifiziert.

6. Verfahren zum Steuern von Zugriff gemäß Anspruch 1, 4 oder 5, **dadurch gekennzeichnet, dass** es eine Freigabephase umfasst, welche die Schritte umfasst:
- Anzeigen eines Bildschirmfensters (31), das angibt, dass der gewählte Dienst gesperrt ist,
- Auslösen, durch Mittel, des Zugriffs auf den Prozess zum Freigeben des Dienstes,
- Anzeigen eines Bildschirmfensters (33), das die Eingabe des Benutzercodes oder das Verlassen des Freigabevorganges vorschlägt,
- Vergleichen des eingegebenen Codes mit einem gespeicherten Code,
- Anzeigen eines Bildschirmfensters (34), das verschiedene Betriebsarten zum Freigeben vorschlägt, wenn der eingegebene Code richtig ist,
- Auswählen einer Betriebsart zum Freigeben,
- Freigeben des Dienstes gemäß der gewählten Betriebsart, oder
- Anzeigen eines Bildschirmfensters (32), das vorschlägt, dass der Benutzercode nochmals eingegeben wird oder dass der Vorgang zum Freigeben des Dienstes verlassen wird, wenn der eingegebene Code nicht richtig ist.

7. Verfahren zum Steuern von Zugriff gemäß Anspruch 6, **dadurch gekennzeichnet, dass** bei Ausbleiben einer Auswahl die Freigabe vorübergehend ist.

8. Verfahren zum Steuern von Zugriff gemäß irgendeinem der Ansprüche 4 bis 7, **dadurch gekennzeichnet, dass** das erneute Sperren eines vorübergehend freigegebenen Dienstes automatisch erfolgt.

9. Verfahren zum Steuern von Zugriff gemäß Anspruch 4 oder 6, **dadurch gekennzeichnet, dass** die ereignisabhängige Betriebsart zum Freigeben sich auf das nächste Ereignis oder auf mehrere aufeinander folgende Ereignisse davon bezieht, während welcher die Bedienungsperson die Freigabe durchführt.

10. Verfahren zum Steuern von Zugriff gemäß Anspruch 1, **dadurch gekennzeichnet, dass** das Sperren die Schritte umfasst:
- Zugreifen auf den Prozess zum Sperren des Programms,
- Anzeigen eines Bildschirmfensters (30), das den Benutzer auffordert, einen Benutzercode einzugeben oder den Sperrvorgang zu verlassen,
- Anzeigen eines Bildschirmfensters (31), das signalisiert, dass der Dienst gesperrt ist, wenn der eingegebene Code richtig ist, oder
- Anzeigen eines Bildschirmfensters (32), das vorschlägt, dass der Benutzercode nochmals eingegeben wird oder dass der Sperrvorgang verlassen wird, wenn der eingegebene Code nicht richtig ist.

11. Verfahren zum Steuern von Zugriff gemäß Anspruch 10, **dadurch gekennzeichnet, dass** das Sperren von einer Liste von für den Benutzer zugänglichen Programmen aus durchgeführt werden kann.

12. Verfahren zum Steuern von Zugriff gemäß Anspruch 2 oder 4, **dadurch gekennzeichnet, dass** es einen Schritt zum Speichern des Beschreibers des aktuellen Ereignisses umfasst, wenn die Betriebsart zum Freigeben ereignisabhängig ist, und einen Schritt zum Erfassen, durch den Mikroprozessor (22), der Veränderung des Beschreibers für das Ereignis, so dass das ereignisabhängige Freigeben durchgeführt wird und das Decodieren des Ereignisses ermöglicht wird.

13. Digitales Empfangsgerät (1) zum Steuern von Zugriff auf audiovisuelle Programme, das Mittel zum Empfangen einer Identifizierung des aktuell gezeigten Programms umfasst, eine Benutzerschnittstelle zu dem Empfangsgerät (1), wobei diese Schnittstelle einen für das Sperren des aktuell gezeigten Programms zweckgebundenen Knopf umfasst, Mittel zum Auslösen des Sperrens des Programms, das aktuell gezeigt wird, die durch das Drücken des zweckgebundenen Knopfes während des Anzeigens des aktuellen Programms aktiviert werden, wobei das Drücken des Knopfes ein Mittel zum Schreiben der Identifizierung des aktuellen Programms in einen Speicher des Empfangsgerätes auslöst, und ein Mittel zum Blockieren des Anzeigens des aktuellen Programms, wenn seine Identifizierung in dem Speicher gespeichert ist.

14. Digitales Empfangsgerät zum Steuern von Zugriff auf audiovisuelle Programme gemäß Anspruch 13, **dadurch gekennzeichnet, dass** es ein Mittel zum Auswählen über die Benutzerschnittstelle von einer von mehreren Betriebsarten zum Sperren umfasst und ein Mittel zum Aufzeichnen in dem Empfangsgerät (1) der Informationen, die zum Implementieren des gewählten Sperrens erforderlich sind.

15. Digitales Empfangsgerät zum Steuern von Zugriff auf audiovisuelle Programme gemäß Anspruch 13, **dadurch gekennzeichnet, dass** die Mittel zum Auslösen der Benutzerschnittstelle mindestens einen Knopf umfassen, der es möglich macht, auf den Sperr- oder Freigabeprozess zuzugreifen.

16. Digitales Empfangsgerät zum Steuern von Zugriff auf audiovisuelle Programme gemäß einem oder mehreren der Ansprüche 13 bis 15, **dadurch gekennzeichnet, dass** die Reaktionsmittel Mittel zum Speichern der Informationen umfassen, die ein Programm einer Betriebsart zum Sperren oder zum Freigeben des Empfangsgerätes (1) zuordnen.

17. Digitales Empfangsgerät zum Steuern von Zugriff auf audiovisuelle Programme gemäß Anspruch 13, **dadurch gekennzeichnet, dass** die Reaktionsmittel Mittel zum Erfassen eines Ereignisses des gespeicherten Programms umfassen, zum Auslösen des Freigebens des Decodierers während des Ereignisses und zum Veranlassen des Sperrens, nachdem das Ende des Ereignisses erfasst wird.

## Revendications

1. Procédé de contrôle de l'accès à des programmes audiovisuels sur un récepteur
(1) numérique de programmes audiovisuels, **caractérisé en ce qu'**il comprend quelle que soit le programme :
- une étape de réception d'un identificateur de programme actuellement visualisé,
- une étape de verrouillage du programme actuellement visualisé par pression d'un bouton dédié à une commande de verrouillage au cours de la visualisation du programme courant, la pression de ce bouton déclenche une étape d'écriture de l'identificateur du programme courant dans une mémoire du récepteur pour verrouiller le programme,
- une étape de blocage de la visualisation du programme courant si son identificateur est écrit dans la mémoire.

2. Procédé de contrôle d'accès selon la revendication 1, **caractérisé en ce que** la phase de verrouillage d'un programme courant comprend :
- une étape de mise en mémoire d'au moins un descripteur transmis dans les paquets émis par le programme courant et identifiant soit le programme, soit un événement particulier du programme,
- une étape d'activation du verrouillage correspondant au descripteur mémorisé.

3. Procédé de contrôle d'accès selon la revendication 1 ou 2, **caractérisé en ce que** le verrouillage est sélectionné selon un mode parmi plusieurs tels que :
- le verrouillage momentané,
- le verrouillage permanent,
- le verrouillage événementiel.

4. Procédé de contrôle d'accès selon la revendication 1, **caractérisé en ce qu'**il comporte une étape de déverrouillage étant sélectionné selon un mode parmi plusieurs tels que:
- le déverrouillage momentané,
- le déverrouillage permanent,
- le déverrouillage événementiel.

5. Procédé de contrôle d'accès selon la revendication 4, **caractérisé en ce que** le déverrouillage momentané est éliminé par une inhibition ou un effacement du descripteur de la mémoire,
- soit à la suite d'une étape de détection d'un changement de canal,
- ou suite à une détection d'un cycle de mise hors tension et sous tension de l'appareil diffusant les programmes audiovisuelles ;
le dit descripteur identifiant le service déverrouillé.

6. Procédé de contrôle d'accès selon la revendication 1, 4 ou 5, **caractérisé en ce qu'**il comporte une étape de déverrouillage comprenant les étapes :
- d'affichage d'une fenêtre d'écran (31) indiquant que le service choisi est verrouillé,
- de déclenchement par des moyens, de l'accès au processus de déverrouillage du service,
- d'affichage d'une fenêtre d'écran (33) proposant la saisie du code utilisateur ou la sortie de la procédure de déverrouillage,
- de comparaison du code saisi à un code mémorisé,
- d'affichage d'une fenêtre d'écran (34) proposant divers modes de déverrouillage, si le code saisi est correct,
- de sélection d'un mode de déverrouillage,
- de déverrouillage du service suivant le mode choisi ou
- d'affichage d'une fenêtre d'écran (32) proposant de saisir à nouveau le code utilisateur ou de quitter la procédure de déverrouillage du service, si le code saisi est incorrect.

7. Procédé de contrôle d'accès selon la revendication 6, **caractérisé en ce qu'**à défaut de sélection, le déverrouillage est momentané.

8. Procédé de contrôle d'accès selon l'une quelconque des revendications 4 à 7, **caractérisé en ce que** le re-verrouillage d'un service déverrouillé de manière momentanée est automatique.

9. Procédé de contrôle d'accès selon la revendication 4 ou 6, **caractérisé en ce que** le mode de déverrouillage événementiel concerne l'événement suivant ou plusieurs événements consécutifs de celui pendant lequel l'opérateur effectue le déverrouillage.

10. Procédé de contrôle d'accès selon la revendication 1, **caractérisé en ce que** le verrouillage comprend les étapes :
- d'accès au processus de verrouillage du programme,
- d'affichage d'une fenêtre d'écran (30) incitant l'utilisateur à saisir un code utilisateur ou à quitter la procédure de verrouillage,
- d'affichage d'une fenêtre d'écran (31) signalant que le service est verrouillé, si le code utilisateur saisi est correct ou,
- d'affichage d'une fenêtre d'écran (32) proposant de saisir à nouveau le code utilisateur ou de quitter la procédure de verrouillage, si le code utilisateur saisi est incorrect.

11. Procédé de contrôle d'accès selon la revendication 10, **caractérisé en ce que** le verrouillage peut être effectué depuis une liste des programmes accessibles par l'utilisateur.

12. Procédé de contrôle d'accès selon la revendication 2 ou 4, **caractérisé en ce qu'**il comporte une étape de mémorisation du descripteur de l'événement courant lorsque le mode de déverrouillage est événementiel et une étape de détection par le microprocesseur (22) du changement de descripteur de l'événement pour effectuer le déverrouillage événementiel et permettre le décodage de l'événement.

13. Récepteur (1) numérique de contrôle de l'accès à des programmes audiovisuels comportant des moyens de réception d'un identificateur de programme actuellement visualisé, une interface utilisateur avec le récepteur (1), cette interface comportant un bouton dédié au verrouillage du programme en cours de visualisation, des moyens de déclenchement d'un verrouillage du programme actuellement visualisé par pression du bouton dédié au cours de la visualisation du programme courant, la pression du bouton déclenchant des moyens d'écriture de l'identificateur du programme courant dans une mémoire du récepteur pour verrouiller le programme, des moyens de blocage de la visualisation du programme courant si son identificateur est écrit dans la mémoire.

14. Récepteur numérique de contrôle de l'accès à des programmes audiovisuels selon la revendication 13, **caractérisé en ce qu'**il comporte des moyens pour sélectionner via l'interface utilisateur un ou plusieurs modes de verrouillage, et des moyens pour enregistrer dans le récepteur (1) l'information nécessaire pour implémenter le verrouillage choisi.

15. Récepteur numérique de contrôle de l'accès à des programmes audiovisuels selon la revendication 13, **caractérisé en ce que** les moyens de déclenchement de l'interface utilisateur comprennent au moins une touche permettant d'accéder au processus de verrouillage ou de déverrouillage.

16. Récepteur numérique de contrôle de l'accès à des programmes audiovisuels selon la revendication 13 ou 14, **caractérisé en ce que** les moyens de réaction comportent des moyens de mémorisation des informations associant un programme à un mode de verrouillage ou de déverrouillage du récepteur (1).

17. Récepteur numérique de contrôle de l'accès à des programmes audiovisuels selon la revendication 13, **caractérisé en ce que** les moyens de réaction comportent des moyens de détecter un événement du programme mémorisé, de déclencher le déverrouillage du décodeur pendant l'événement et de provoquer le verrouillage à la détection de la fin de l'événement.
